# EUROPEAN PATENT APPLICATION

(11) **EP 4 579 627 A1**
(43) Date of publication of application: **02.07.2025**
(21) Application number: 22956407.5
(22) Date of filing: 22.08.2022
(51) Int. Cl.: G08G 1/09

(54) **COMMUNICATION SYSTEM**

(71) Applicant: MITSUBISHI ELECTRIC CORPORATION, Chiyoda-ku Tokyo 100-8310 (JP)
(72) Inventor: MAKINO Shinya, Tokyo 100-8310 (JP); IWAYAMA Naofumi, Tokyo 100-8310 (JP); HASEGAWA Fumiki, Tokyo 100-8310 (JP); ANDO Nobuhiko, Tokyo 100-8310 (JP); MOCHIZUKI Mitsuru, Tokyo 100-8310 (JP); SHIMODA Tadahiro, Tokyo 100-8310 (JP)
(74) Representative: Pfenning, Meinig & Partner mbB
(86) International application number: PCT/JP2022/031558
(87) International publication number: WO 2024/042579

(57) **Abstract**

A communication system includes a roadside unit (200) that transmits request information indicating a prediction request of communication quality, prediction using information as information to be used for prediction of the communication quality, and position information upon receiving the request information from a vehicle (100), a V2X application server (500) that provides the vehicle with a service, and a prediction device (700) that predicts the communication quality of a communication path from the V2X application server (500) to the roadside unit (200) based on the prediction using information and the position information regarding the roadside unit (200) upon receiving the request information, the prediction using information and the position information regarding the roadside unit (200).

## Description

### TECHNICAL FIELD

The present disclosure relates to a communication system.

### BACKGROUND ART

Remote driving, autonomous driving, automatic parking, and so forth have been known as V2X services. In order to implement a V2X service, Quality of Service (QoS) is predicted. If a notification of the result of the prediction is sent to a vehicle, the vehicle is capable of initiating the vehicle's action, such as stoppage of the traveling, deceleration or steering operation, before the QoS deteriorates. Incidentally, this notification is referred to also as an " In-advance QoS Notification (IQN)". Further, this action is referred to also as a "V2X adaptation".

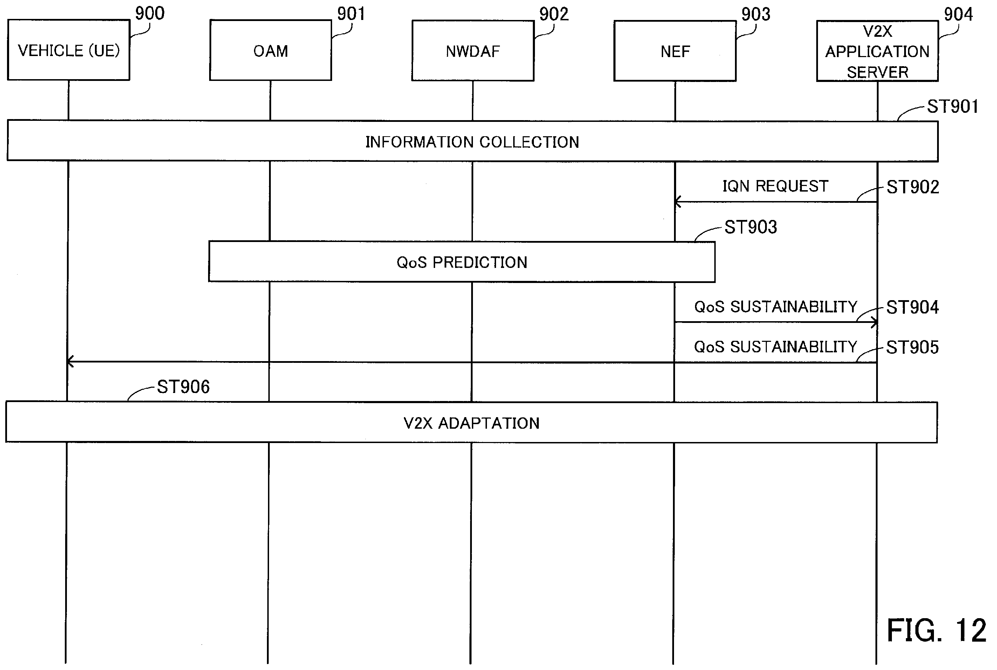

For example, an IQN sequence is described in chapter 6.4.1 of Non-patent Reference 1. A system that sends the IQN will be described below by using Fig. 12. Fig. 12 shows a system in a 5G network. The system includes a vehicle 900, an Operation and Maintenance (OAM) 901, a Network Data Analytic Function (NWDAF) 902, a Network Exposure Function (NEF) 903 and a V2X application server 904. When the V2X application server 904 provides a result of the prediction of the QoS regarding a V2X service to the vehicle 900, information such as position information regarding the vehicle 900, a requested QoS, and a QoS threshold value is collected (step ST901). The V2X application server 904 transmits an In-advance QoS Notification (IQN) request (step ST902). The NWDAF 902 receives the IQN request via the NEF 903. The QoS is predicted based on the collected information (step ST903). The NWDAF 902 transmits QoS sustainability (a result of the prediction) to the V2X application server 904 (step ST904). The V2X application server 904 transmits the QoS sustainability to the vehicle 900 (step ST905). Accordingly, the V2X adaptation is performed (step ST906).

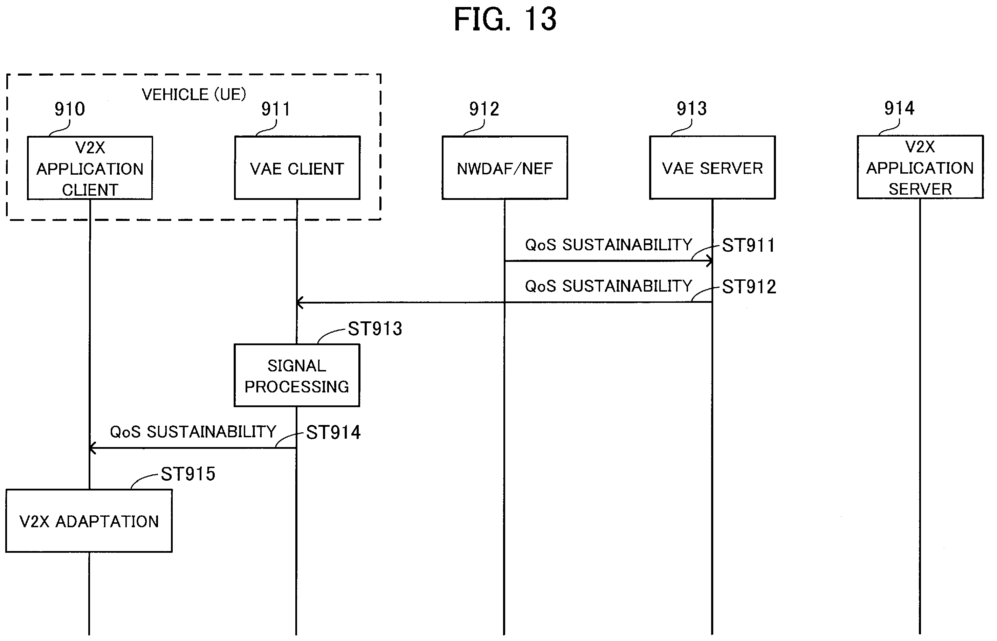

Further, for example, an IQN sequence is described in chapter 5 of Non-patent Reference 2. A system that sends the IQN will be described below by using Fig. 13. Fig. 13 shows a system in a 5G network. The system includes a V2X application client 910, a VAE client 911, an NWDAF/NEF 912, a VAE server 913 and a V2X application server 914. The VAE server 913 receives the QoS sustainability (step ST911). The VAE server 913 transmits the QoS sustainability to the VAE client 911 (step ST912). The VAE client 911 executes signal processing for converting the QoS sustainability to a state processable in a vehicle (step ST913). The VAE client 911 transmits the QoS sustainability to the V2X application client 910 (step ST914). Accordingly, the V2X application client 910 is capable of performing the V2X adaptation (step ST915).

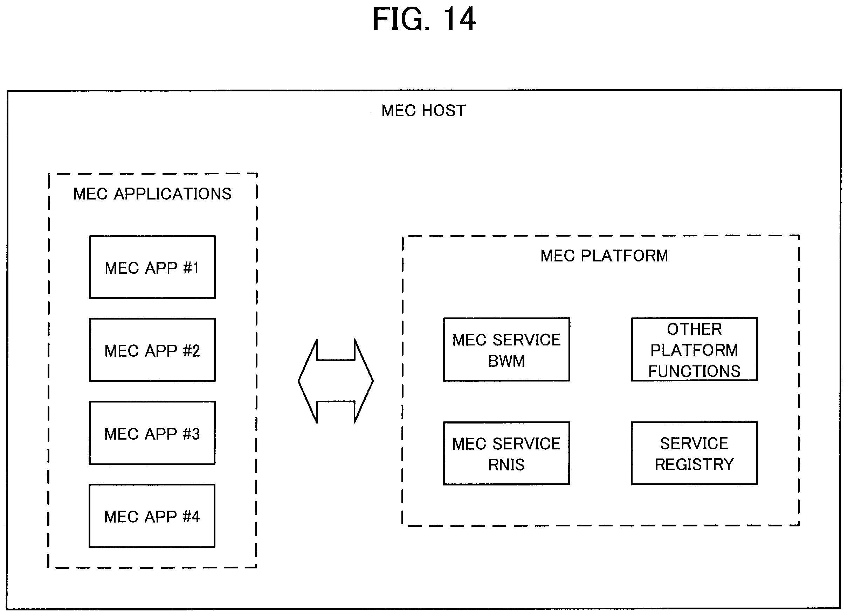

Furthermore, for example, chapter 4.9 of Non-patent Reference 3 proposes a Multi-access Edge Computing (MEC) platform. Fig. 14 indicates that a MEC application #1 (IQN analytics) for making the QoS prediction and a MEC application #2 (V2X app A) and a MEC application #3 (V2X app B) for performing a V2X service are arranged in a MEC host.

### PRIOR ART REFERENCE

### NON-PATENT REFERENCE

Non-patent Reference 1: 3GPP TS 23.287 V17.3.0, 2022
Non-patent Reference 2: 5GAA TR-200055, 2020
Non-patent Reference 3: 5GAA TR A-190176, 2019

### SUMMARY OF THE INVENTION

### PROBLEM TO BE SOLVED BY THE INVENTION

Incidentally, a device including the NWDAF predicts the QoS for an indefinitely large number of vehicles. Therefore, the load on the device is necessitated to be high.

An object of the present disclosure is to reduce the load on a device that predicts the QoS.

### MEANS FOR SOLVING THE PROBLEM

A communication system according to an aspect of the present disclosure is provided. The communication system includes a roadside unit that transmits request information indicating a prediction request of communication quality, prediction using information as information to be used for prediction of the communication quality, and position information upon receiving the request information from a vehicle, a service provision device that provides the vehicle with a service, and a prediction device that predicts the communication quality of a communication path from the service provision device to the roadside unit based on the prediction using information and the position information regarding the roadside unit upon receiving the request information, the prediction using information and the position information regarding the roadside unit.

### EFFECT OF THE INVENTION

According to the present disclosure, the load on a device that predicts the QoS can be reduced.

### BRIEF DESCRIPTION OF THE DRAWINGS

Fig. 1 is a diagram showing a communication system in a first embodiment.
Fig. 2 is a diagram showing details of a vehicle in the first embodiment.
Fig. 3 is a diagram showing details of a roadside unit in the first embodiment.
Fig. 4 is a sequence diagram (No. 1) showing an example of a process executed in the communication system in the first embodiment.
Fig. 5 is a sequence diagram (No. 2) showing the example of the process executed in the communication system in the first embodiment.
Fig. 6 is a sequence diagram (No. 3) showing the example of the process executed in the communication system in the first embodiment.
Fig. 7 is a sequence diagram (No. 4) showing the example of the process executed in the communication system in the first embodiment.
Fig. 8 is a diagram showing a communication system in a second embodiment.
Fig. 9 is a diagram showing details of a vehicle in the second embodiment.
Fig. 10 is a sequence diagram (No. 1) showing an example of a process executed in the communication system in the second embodiment.
Fig. 11 is a sequence diagram (No. 2) showing the example of the process executed in the communication system in the second embodiment.
Fig. 12 is a diagram (No. 1) showing an example of a system capable of performing a V2X adaptation.
Fig. 13 is a diagram (No. 2) showing an example of the system capable of performing the V2X adaptation.
Fig. 14 is a diagram showing an example of the MEC platform.

### MODE FOR CARRYING OUT THE INVENTION

Embodiments will be described below with reference to the drawings. The following embodiments are just examples and a variety of modifications are possible within the scope of the present disclosure.

### First Embodiment

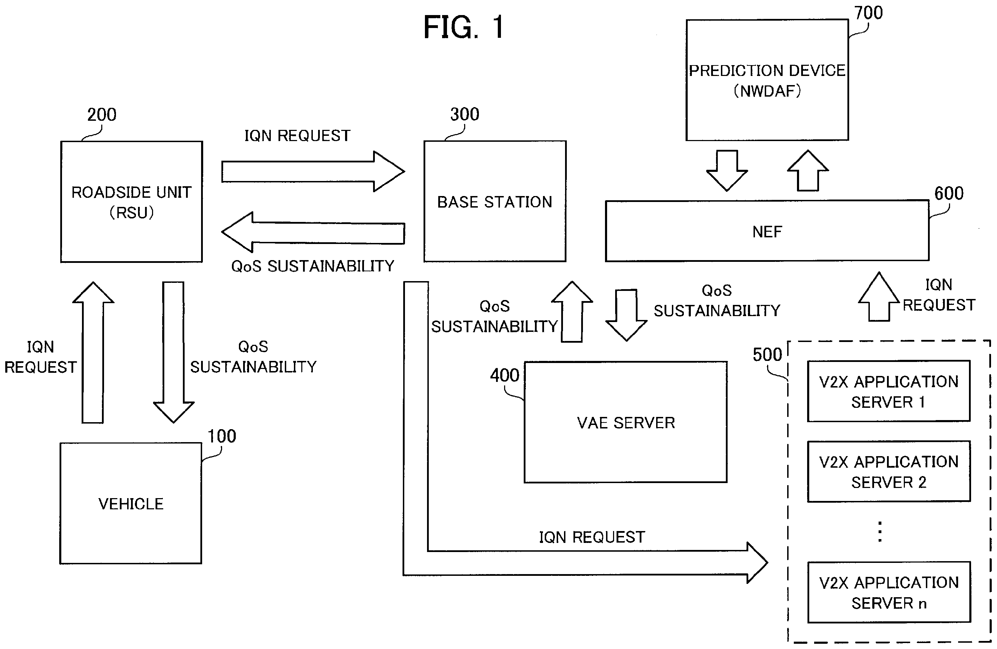

Fig. 1 is a diagram showing a communication system in a first embodiment. The communication system includes a roadside unit (RSU) 200, a V2X application server 500 and a prediction device 700. Further, the communication system may include a vehicle 100, a base station 300, a VAE server 400 and an NEF 600.

The vehicle 100 transmits an IQN request to the roadside unit 200. The IQN request is referred to also as request information. The request information is information indicating a prediction request of communication quality. The communication quality is the QoS.

Upon receiving the IQN request from the vehicle 100, the roadside unit 200 transmits the IQN request, information to be used for the QoS prediction, and position information regarding the roadside unit 200. Incidentally, the information to be used for the QoS prediction is referred to also as prediction using information. Further, the information to be used for the QoS prediction can be information received from the vehicle 100. The information to be used for the QoS prediction can also be information stored in the roadside unit 200 or information stored in a device connectable to the roadside unit 200. Furthermore, the position information regarding the roadside unit 200 is information stored in the roadside unit 200, for example.

The base station 300 may be referred to as a radio base station. The base station 300 transmits the IQN request, the information to be used for the QoS prediction, and the position information regarding the roadside unit 200 to the V2X application server 500.

The V2X application server 500 is referred to also as a service provision device. The V2X application server 500 provides the vehicle 100 with a service. In the following description, this service is assumed to be a V2X service. The V2X application server 500 can be either a real server or a virtual server. Upon receiving the IQN request, the information to be used for the QoS prediction, and the position information regarding the roadside unit 200, the V2X application server 500 transmits the IQN request, the information to be used for the QoS prediction, and the position information regarding the roadside unit 200 to the prediction device 700 via the NEF 600.

The NEF 600 may be implemented by one device. It is permissible even if the NEF 600 is included in the prediction device 700.

The prediction device 700 includes an NWDAF. The prediction device 700 receives the IQN request, the information to be used for the QoS prediction, and the position information regarding the roadside unit 200. The prediction device 700 may receive the information including the IQN request, the information to be used for the QoS prediction, and the position information regarding the roadside unit 200 from the roadside unit 200 or the base station 300. The prediction device 700 predicts the QoS based on the information to be used for the QoS prediction and the position information regarding the roadside unit 200. Specifically, the prediction device 700 predicts the QoS of a communication path from the V2X application server 500 to the roadside unit 200. For example, the contents of the QoS may include an error ratio, a delay, a bit rate, and so forth of the communication path.

The prediction device 700 transmits QoS sustainability as a result of the prediction of the QoS to the vehicle 100 via devices such as the roadside unit 200.

In the following, the communication system will be described in detail.

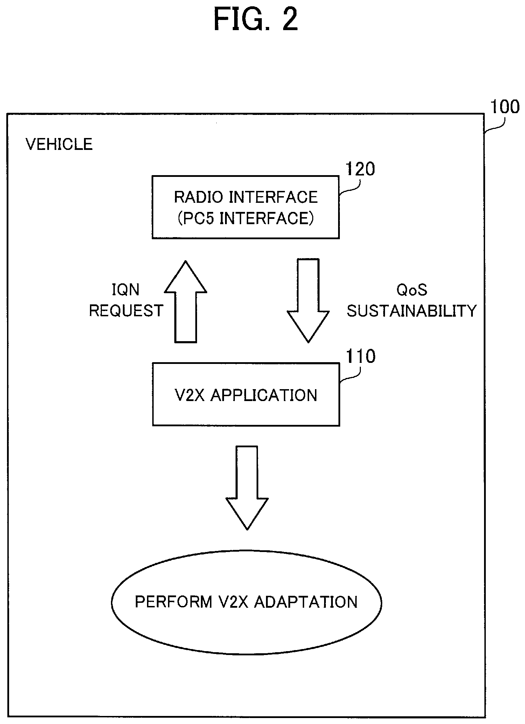

Fig. 2 is a diagram showing the details of the vehicle in the first embodiment. The vehicle 100 includes a V2X application 110 and a radio interface 120. The V2X application 110 and the radio interface 120 will be described later.

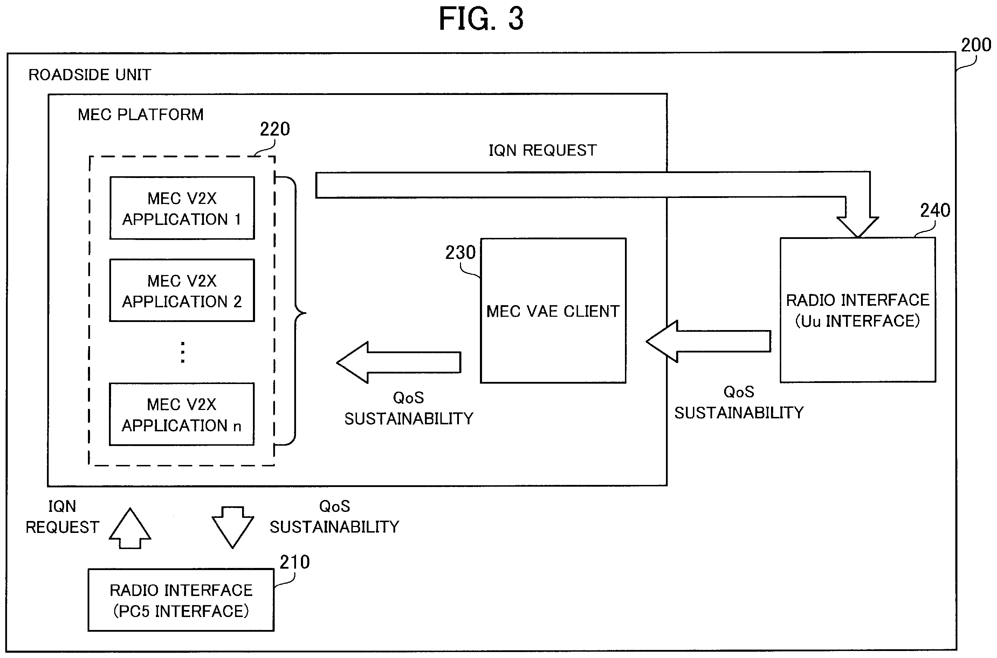

Fig. 3 is a diagram showing the details of the roadside unit in the first embodiment. The roadside unit 200 includes a radio interface 210, a MEC V2X application 220, a MEC VAE client 230 and a radio interface 240. The radio interface 210, the MEC V2X application 220, the MEC VAE client 230 and the radio interface 240 will be described later.

Next, a process executed in the communication system will be described below by using a sequence diagram.

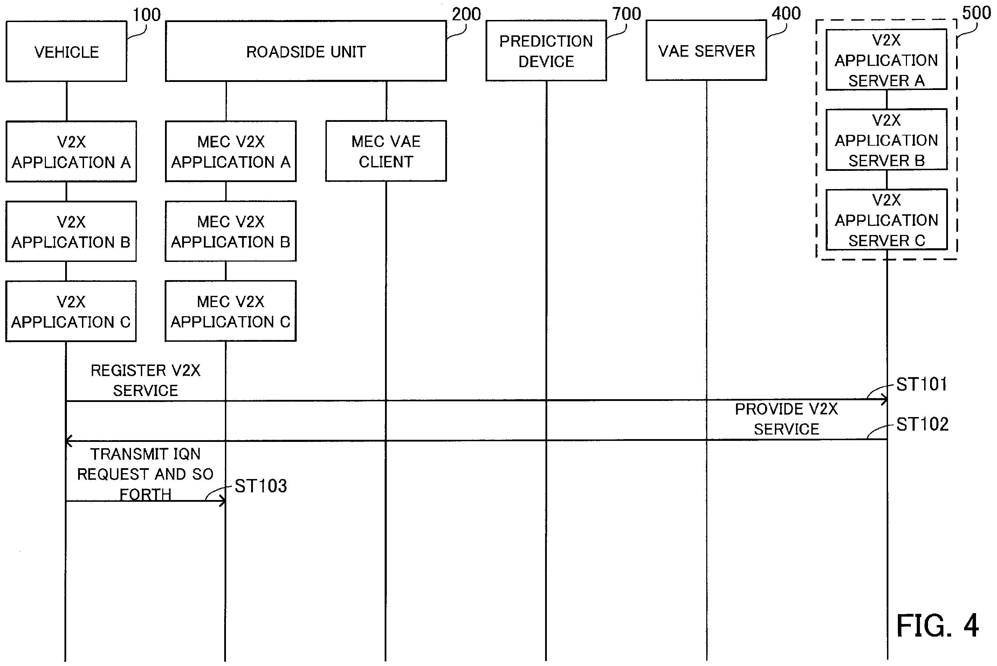

Fig. 4 is a sequence diagram (No. 1) showing an example of the process executed in the communication system in the first embodiment.

In Fig. 4 and Figs. 5 to 7 which will be explained later, illustration of the base station 300 and the NEF 600 is left out.

(Step ST101) The vehicle 100 hoping for a V2X service registers the V2X service in the V2X application server 500.

(Step ST102) The V2X application server 500 provides the vehicle 100 with the V2X service.

(Step ST103) The V2X application 110 of the vehicle 100 transmits the IQN request and the information to be used for the QoS prediction to the nearest roadside unit 200 via the radio interface 120. Incidentally, the information to be used for the QoS prediction may be, for example, a V2X service type regarding the IQN, a requested QoS, a QoS prediction period, a QoS threshold value at the time of notifying of the IQN, an identification number of the vehicle 100 that transmitted the IQN request, and so forth. The QoS prediction period may be represented also as prediction timing.

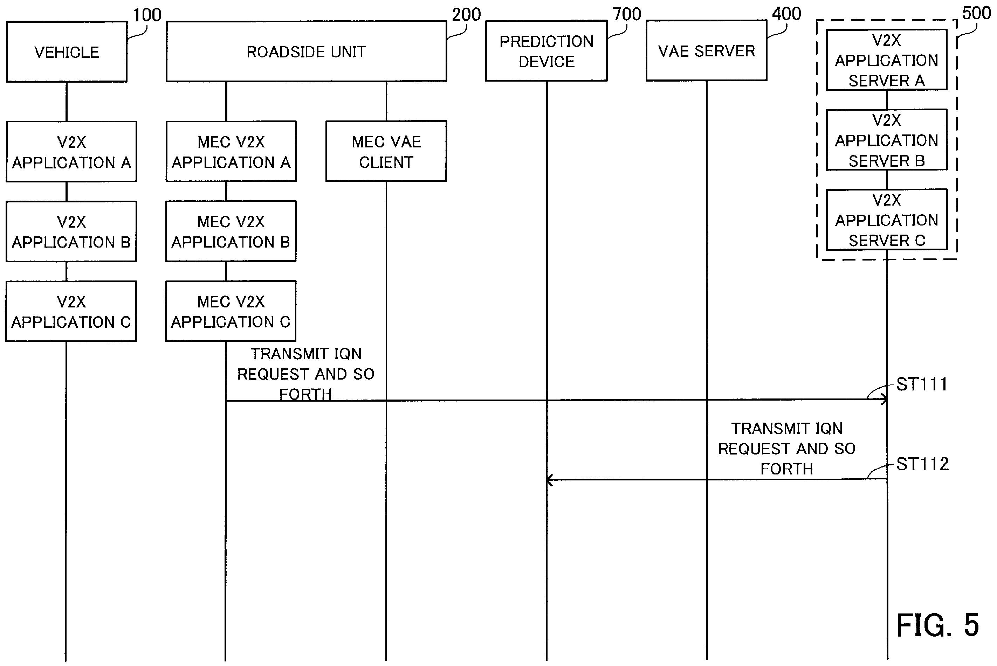

Fig. 5 is a sequence diagram (No. 2) showing the example of the process executed in the communication system in the first embodiment.

(Step ST111) The MEC V2X application 220 of the roadside unit 200 transmits the IQN request, the information to be used for the QoS prediction, and the position information regarding the roadside unit 200 to the V2X application server 500 via the base station 300.

(Step ST112) The V2X application server 500 transmits the IQN request, the information to be used for the QoS prediction, and the position information regarding the roadside unit 200 to the prediction device 700 via the NEF 600.

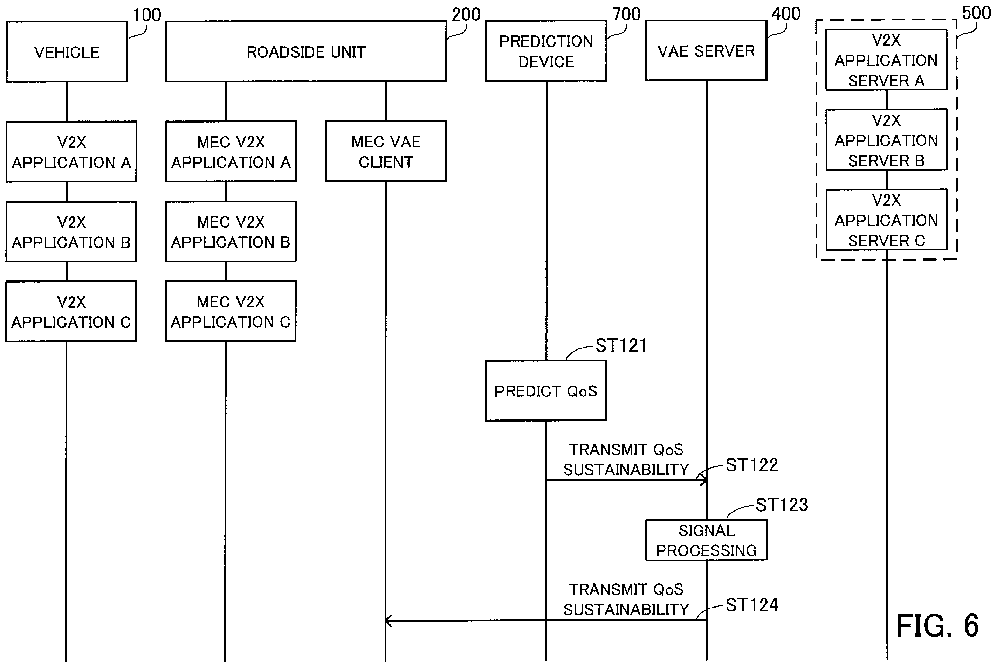

Fig. 6 is a sequence diagram (No. 3) showing the example of the process executed in the communication system in the first embodiment.

(Step ST121) The prediction device 700 predicts the QoS of the communication path from the V2X application server 500 to the roadside unit 200 based on the information to be used for the QoS prediction, the position information regarding the roadside unit 200, and so forth.

(Step ST122) The prediction device 700 transmits the QoS sustainability as a result of the prediction of the QoS to the VAE server 400 via the NEF 600.

(Step ST123) The VAE server 400 performs signal processing for adapting to API on the QoS sustainability.

(Step ST124) The VAE server 400 transmits the QoS sustainability to the roadside unit 200 via the base station 300.

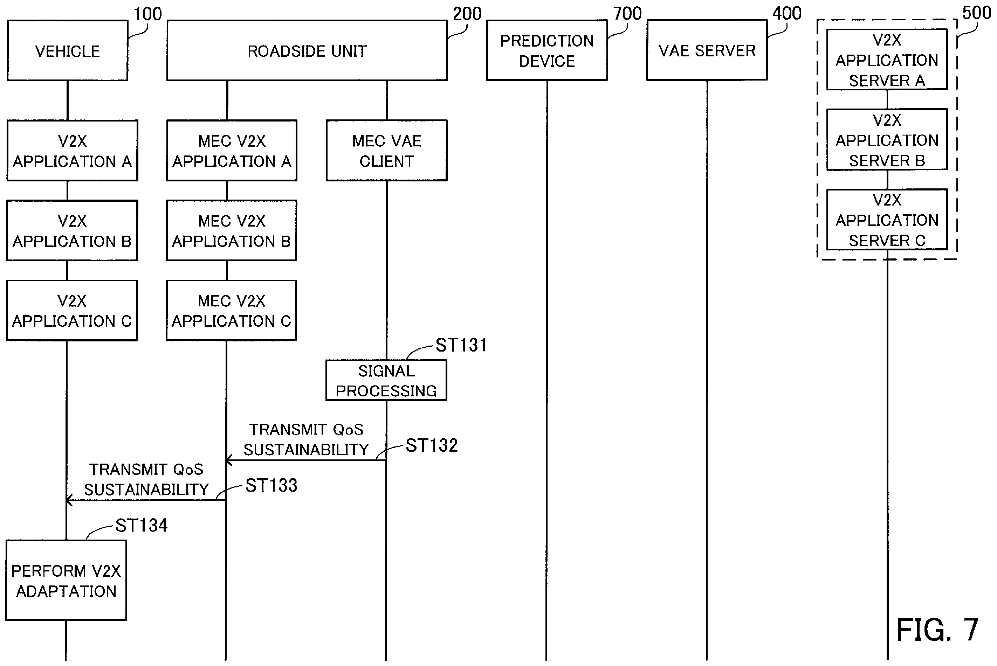

Fig. 7 is a sequence diagram (No. 4) showing the example of the process executed in the communication system in the first embodiment.

(Step ST131) The MEC VAE client 230 of the roadside unit 200 executes signal processing for converting the QoS sustainability to a state processable by the MEC V2X application 220.

(Step ST132) The MEC VAE client 230 of the roadside unit 200 transmits the QoS sustainability to the MEC V2X application 220.

(Step ST133) The MEC V2X application 220 of the roadside unit 200 transmits the QoS sustainability to the vehicle 100 that transmitted the IQN request via the radio interface 210.

(Step ST134) The V2X application 110 of the vehicle 100 performs the V2X adaptation depending on the contents of the QoS sustainability.

According to the first embodiment, the prediction device 700 does not predict the QoS for IQN requests transmitted by an indefinitely large number of vehicles. The prediction device 700 makes the prediction of the QoS only for an IQN request transmitted by the roadside unit 200. Accordingly, the communication system is capable of reducing the load on the prediction device 700.

Further, there are cases where the roadside unit 200 receives a plurality of IQN requests from a plurality of vehicles. When a plurality of IQN requests is received, the following process is executed in the communication system.
First, the prediction timing is included in the information to be used for the QoS prediction. The roadside unit 200 transmits the plurality of IQN requests, information to be used for a plurality of QoS predictions corresponding to the plurality of IQN requests, and the position information regarding the roadside unit 200. Upon receiving the plurality of IQN requests, the information to be used for the plurality of QoS predictions, and the position information regarding the roadside unit 200, the prediction device 700 assigns priority rankings to the plurality of IQN requests based on a plurality of prediction timings included in the information to be used for the plurality of QoS predictions and a present time. Specifically, the prediction device 700 assigns the priority rankings to the plurality of IQN requests in order of closeness to the present time. The prediction device 700 predicts the QoSs based on the priority rankings. Accordingly, the prediction device 700 is capable of predicting the QoSs in order corresponding to the prediction timings.

### Second Embodiment

Next, a second embodiment will be described below. In the second embodiment, the description will be given mainly of features different from those in the first embodiment. In the second embodiment, the description is omitted for features in common with the first embodiment.

In the first embodiment, the vehicle 100 receives the QoS sustainability via the roadside unit 200. In the second embodiment, the description will be given of a case where the vehicle 100 receives the QoS sustainability from the base station 300.

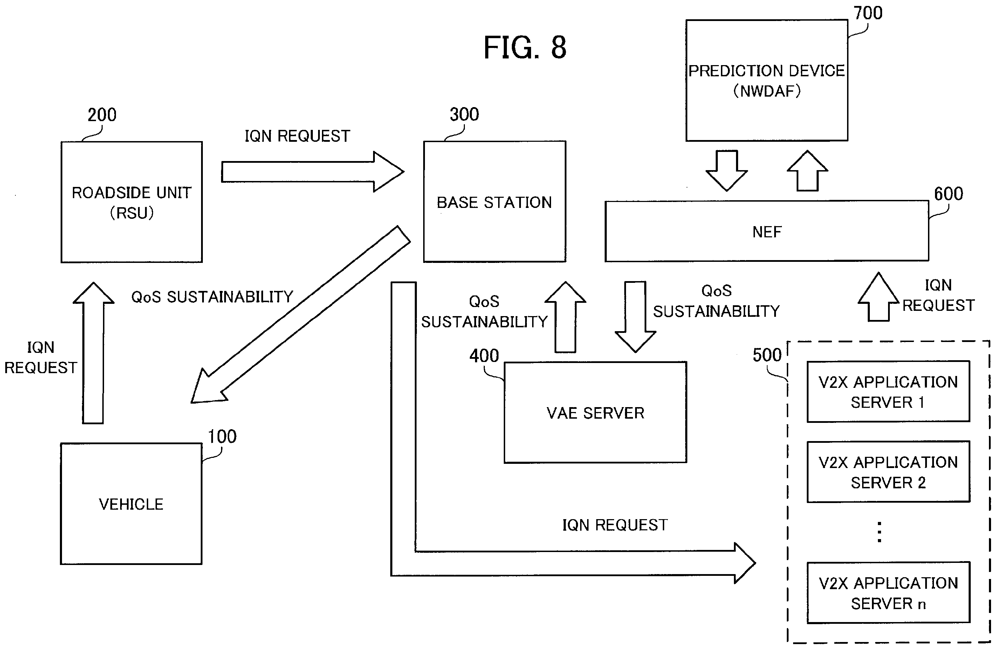

Fig. 8 is a diagram showing a communication system in the second embodiment. Fig. 8 indicates that the vehicle 100 receives the QoS sustainability from the base station 300.

Next, the vehicle 100 will be described in detail below.

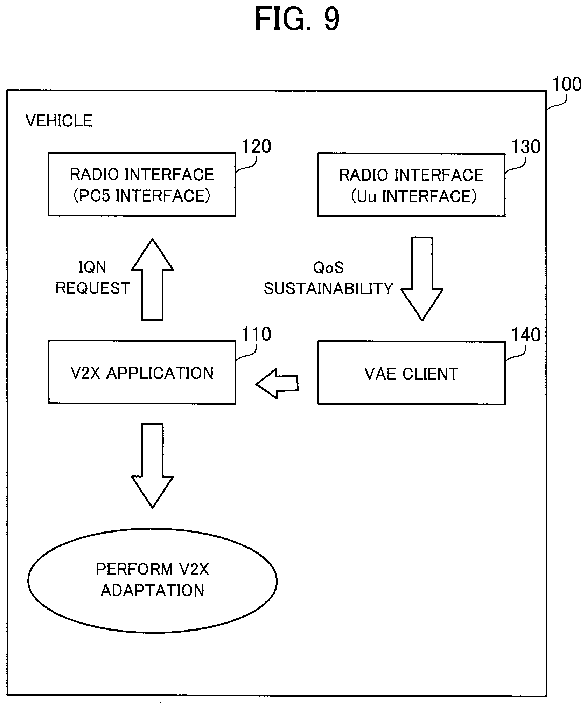

Fig. 9 is a diagram showing the details of the vehicle in the second embodiment. The vehicle 100 further includes a radio interface 130 and a VAE client 140.

The radio interface 130 receives the QoS sustainability from the base station 300. The radio interface 130 transmits the QoS sustainability to the VAE client 140.

The VAE client 140 performs signal processing for adapting to API on the QoS sustainability and transmits the QoS sustainability to the V2X application 110. Accordingly, the V2X application 110 is capable of performing the V2X adaptation depending on the contents of the QoS sustainability.

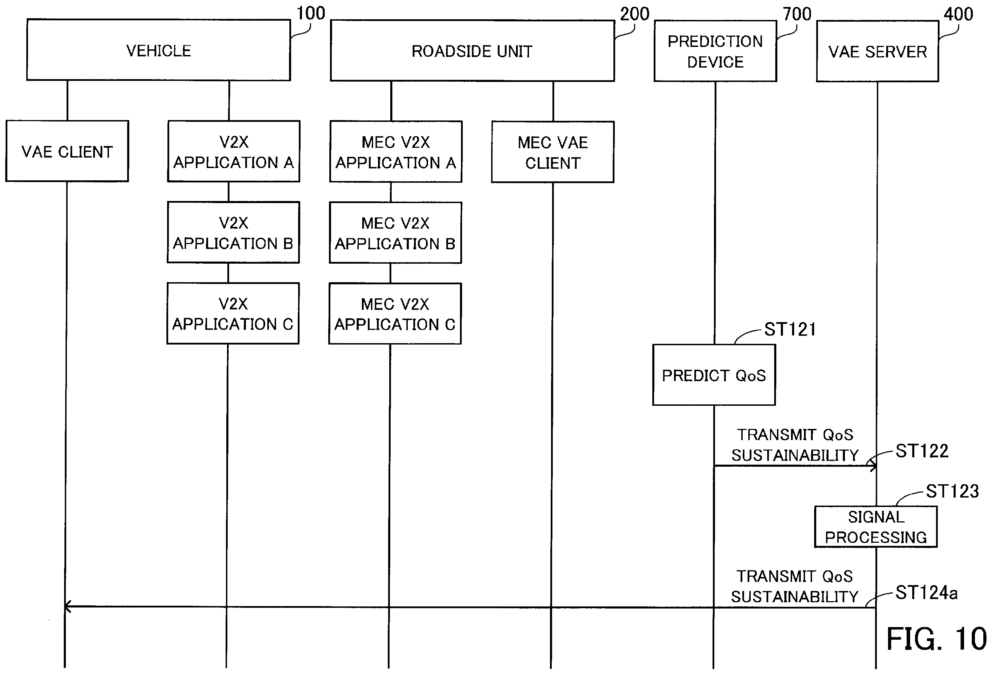

Fig. 10 is a sequence diagram (No. 1) showing an example of a process executed in the communication system in the second embodiment. The process in Fig. 10 differs from the process in Fig. 6 in that step ST124a is executed. Thus, the step ST124a in Fig. 10 will be described below. Then, the description will be omitted for processing other than the step ST124a. Incidentally, the V2X application server 500 is left out in Fig. 10.

(Step ST124a) The VAE server 400 transmits the QoS sustainability to the VAE client 140 of the vehicle 100 via the base station 300.

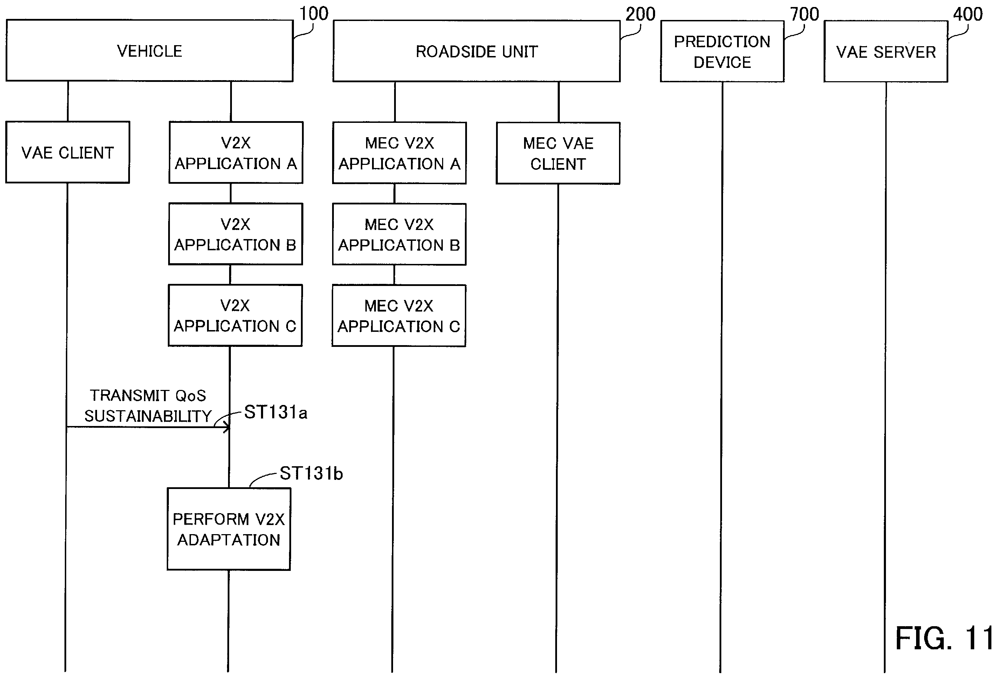

Fig. 11 is a sequence diagram (No. 2) showing the example of the process executed in the communication system in the second embodiment. The process in Fig. 11 differs from the process in Fig. 7 in that step ST131a is executed. Thus, the step ST131a in Fig. 10 will be described below. Incidentally, the step ST131a is executed after the step ST124a. Further, the V2X application server 500 is left out in Fig. 11.

(Step ST131a) The VAE client 140 of the vehicle 100 transmits the QoS sustainability to the V2X application 110.

(Step ST131b) The V2X application 110 of the vehicle 100 performs the V2X adaptation depending on the contents of the QoS sustainability.

The vehicle 100 may receive the QoS sustainability from the prediction device 700. In other words, the prediction device 700 may transmit the QoS sustainability to the vehicle 100 not via the roadside unit 200.

As above, the QoS sustainability is received by the vehicle 100 not via the roadside unit 200. Thus, in the second embodiment, the vehicle 100 can quickly receive the QoS sustainability.

Features in the embodiments described above can be appropriately combined with each other.

### DESCRIPTION OF REFERENCE CHARACTERS

100: vehicle, 110: V2X application, 120: radio interface, 130: radio interface, 140: VAE client, 200: roadside unit, 210: radio interface, 220: MEC V2X application, 230: MEC VAE client, 240: radio interface, 300: base station, 400: VAE server, 500: V2X application server, 600: NEF, 700: prediction device, 900: vehicle, 901: OAM, 902: NWDAF, 903: NEF, 904: V2X application server, 910: V2X application client, 911: VAE client, 912: NWDAF/NEF, 913: VAE server, 914: V2X application server

## Claims

1. A communication system comprising:
a roadside unit that transmits request information indicating a prediction request of communication quality, prediction using information as information to be used for prediction of the communication quality, and position information upon receiving the request information from a vehicle;
a service provision device that provides the vehicle with a service; and
a prediction device that predicts the communication quality of a communication path from the service provision device to the roadside unit based on the prediction using information and the position information regarding the roadside unit upon receiving the request information, the prediction using information and the position information regarding the roadside unit.

2. The communication system according to claim 1,
wherein
the prediction using information includes prediction timing,
the roadside unit transmits the plurality of pieces of the request information, a plurality of pieces of the prediction using information corresponding to the plurality of pieces of the request information, and the position information regarding the roadside unit upon receiving a plurality of pieces of the request information from a plurality of vehicles, and
the prediction device assigns priority rankings to the plurality of pieces of the request information based on a plurality of prediction timings included in the plurality of pieces of the prediction using information and a present time and predicts the communication quality based on the priority rankings upon receiving the plurality of pieces of the request information, the plurality of pieces of the prediction using information, and the position information regarding the roadside unit.

3. The communication system according to claim 1,
wherein a result of the prediction is received by the vehicle not via the roadside unit.
